# EUROPEAN PATENT APPLICATION

(11) **EP 4 296 912 A1**
(43) Date of publication of application: **27.12.2023**
(21) Application number: 23179526.1
(22) Date of filing: 15.06.2023
(51) Int. Cl.: G06Q 10/00, G06Q 10/06, G06Q 50/02

(54) **FARMING MACHINE SETTINGS DATABASE AND GENERATION THEREOF USING COMPUTING SYSTEMS**

(30) Priority: 21.06.2022 US 202263366739 P
(71) Applicant: Agco Corporation, Duluth, Georgia 30096 (US)
(72) Inventor: KOCH, Jared J, Hesston, 67062 (US); LEININGER, Jay Anthony, Hesston, 67062 (US)
(74) Representative: AGCO Intellectual Property Department

(57) **Abstract**

Described herein is a novel agricultural machine settings database (103) as well as technologies for generating and updating the database (103) using a computing scheme (505) (such as a scheme including artificial neural network (ANN) or, more specifically, convolutional neural networks (CNNs)).

## Description

### TECHNICAL FIELD

The present disclosure relates to farming information systems and generation of such systems using computing systems and schemes.

### BACKGROUND

Precision agriculture or precision farming is a farming management model based on measuring and responding to inter and intra-field variability in crops and farming conditions. The goal of precision agriculture research is to define a decision support system (DSS) for farming management to enhance returns and increase preservation of resources. Specifically, the precision in responses to variability in farming can be improved when known and predetermined farming information is processed and organized to enhance the information and then used to assist in the control and management of farming. Also, machine to machine (M2M) communication can further improve the enhanced farming information by allowing data collected by computers of farming equipment to be shared with other farming equipment. M2M communication is direct communication between machines using wired and wireless communications. And, as mentioned, M2M communication can include communications between farming equipment, such as one farming machine communicating with another.

Currently, farming management information systems as well as M2M communications are pervasive in farming and a significant factor in the furthering of precision agriculture. Such information systems can track measuring and responding to inter and intra-field variability in crops and farming conditions as well as enhance DDS for farming management. Also, regarding M2M communications, settings and readings from one farming machine can be communicated to another farming machine and this can be especially useful when similar types of machines are in communication. Also, farming attributes retrieved via sensors or meters from one machine can be communicated to other machines as well as farming management information systems (FMISs). Furthermore, the spread of computer networks into the farming industry has made M2M communication more robust while using less power.

These networks as well as FMISs allow for new opportunities to improve farming and precision agriculture. However, even though FMISs and M2M communications are improving precision farming, present FMISs and M2M communications have limitations and can be dramatically improved upon considering relatively recent advancements in computer engineering and computer science. One problem with previous systems is the collection and organization of information from farming. This can be a problem since farming conditions and crop variability can vary greatly in the operations from one field to another as well as between similar farming machines. This is just one of the many issues that can be improved upon in farming, and specifically, in precision agriculture.

### SUMMARY

Described herein are technologies that leverage farming information systems and generation of such systems using computing systems and schemes (such as artificial neural networks (ANNs)). The technologies include systems and methods for enhancing and sharing farming information and operational settings of farming machines as well as graphical user interfaces (GUIs) that present the enhancements and the sharing of farming information and settings to operators of the machines. With such technologies or technical solutions, technical problems that occur in precision farming can be improved upon or completely overcome. In some embodiments, the technologies include a novel farming machine settings database, which can be a part of a farming management information system (FMIS), and include techniques borrowed from computer engineering principals for generating and updating the database using computing schemes such as schemes including ANNs or, more specifically, convolutional neural networks (CNNs).

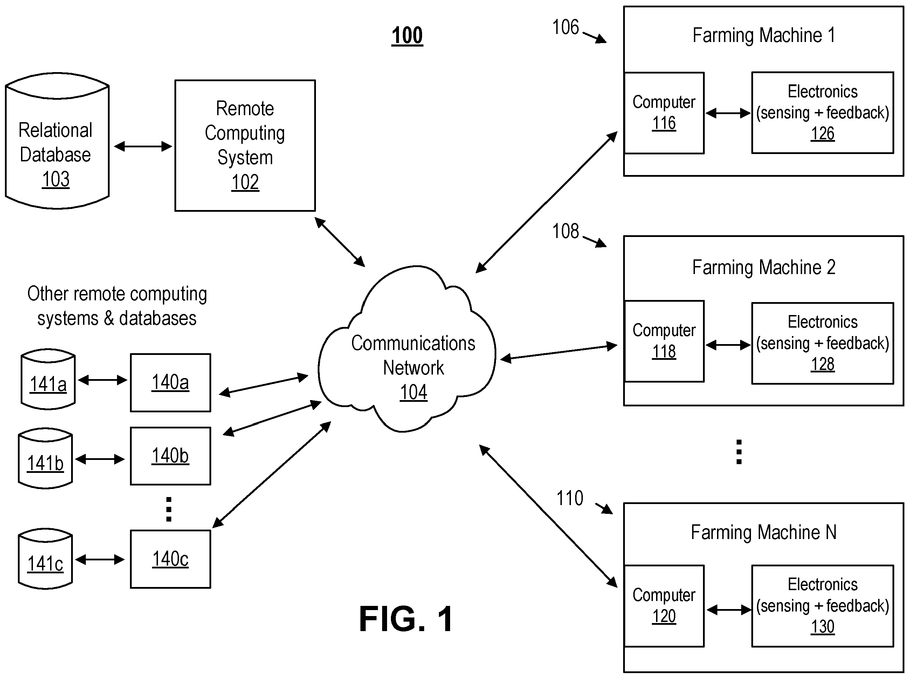

In some embodiments, a system of the technologies includes a communications network (e.g., see communications network 104 shown in FIG. 1) and a remote computing system (e.g., see remote computing system 102 shown in FIG. 1). The remote computing system (e.g., see remote computing system 102) is configured to receive, via the communications network (e.g., see communications network 104), agricultural information including prescribed operational settings for farming machines (e.g., see farming machines 106, 108, and 110 shown in FIG. 1), crop variety information, and environmental information that includes weather condition factors and soil condition factors. The remote computing system (e.g., see remote computing system 102) is also configured to record the agricultural information as first relational database elements in a relational database (e.g., see relational database 103 shown in FIG. 1). The remote computing system (e.g., see remote computing system 102) is also configured to determine situational operational settings based on the recorded agricultural information and record the situational operational settings as second relational database elements in the relational database (e.g., see relational database 103). The remote computing system (e.g., see remote computing system 102) is also configured to link the second relational database elements to the first relational database elements according to inputs of the determinations of the situational operational settings. The remote computing system (e.g., see remote computing system 102) is also configured to select at least one setting of the recorded situational operational settings according to a database query based on or included in a request sent from a computer (e.g., see computer 116, 118, or 120 shown in FIG. 1) of a farming machine (e.g., see farming machines 106, 108, and 110) as well as send, via the communications network (e.g., see communications network 104), the at least one setting to the farming machine (e.g., see farming machines 106, 108, and 110) according to the request.

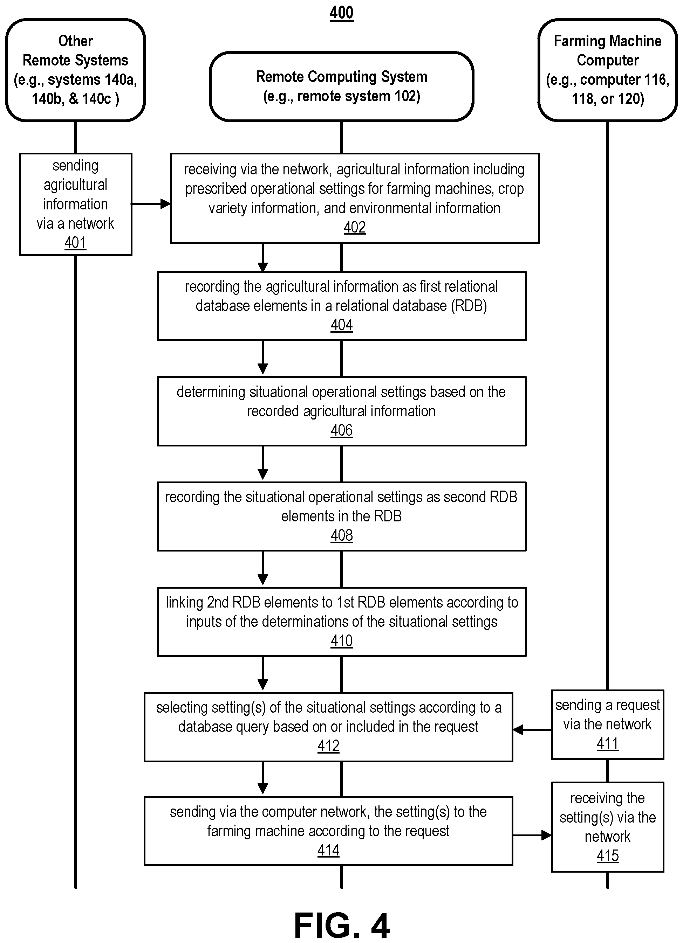

In some embodiments, a method of the technologies includes receiving via a communications network (e.g., see communications network 104 shown in FIG. 1), by a remote computing system (e.g., see remote computing system 102), agricultural information including prescribed operational settings for farming machines (e.g., see farming machines 106, 108, and 110), crop variety information, and environmental information that includes weather condition factors and soil condition factors (e.g., see step 402 shown in FIG. 4). The method also includes recording, by the remote computing system (e.g., see remote computing system 102), the agricultural information as first relational database elements in a relational database (e.g., see relational database 103 shown in FIG. 1 as well as step 404 shown in FIG. 4). The method also includes determining, by the remote computing system (e.g., see remote computing system 102), situational operational settings based on the recorded agricultural information (e.g., see step 406 shown in FIG. 4) as well as recording, by the remote computing system (e.g., see remote computing system 102), the situational operational settings as second relational database elements in the relational database (e.g., see relational database 103 as well as step 408). The method also includes linking, by the remote computing system (e.g., see remote computing system 102), the second relational database elements to the first relational database elements according to inputs of the determinations of the situational operational settings (e.g., see step 410). The method also includes selecting, by the remote computing system (e.g., see remote computing system 102), at least one setting of the recorded situational operational settings according to a database query based on or included in a request sent from a computer (e.g., see computer 116, 118, or 120) of a farming machine (e.g., see farming machine 106, 108, or 110 and step 412) and sending via the communications network (e.g., see communications network 104), by the remote computing system (e.g., see remote computing system 102), the at least one setting to the farming machine (e.g., see farming machine 106, 108, or 110) according to the request (e.g., see step 414).

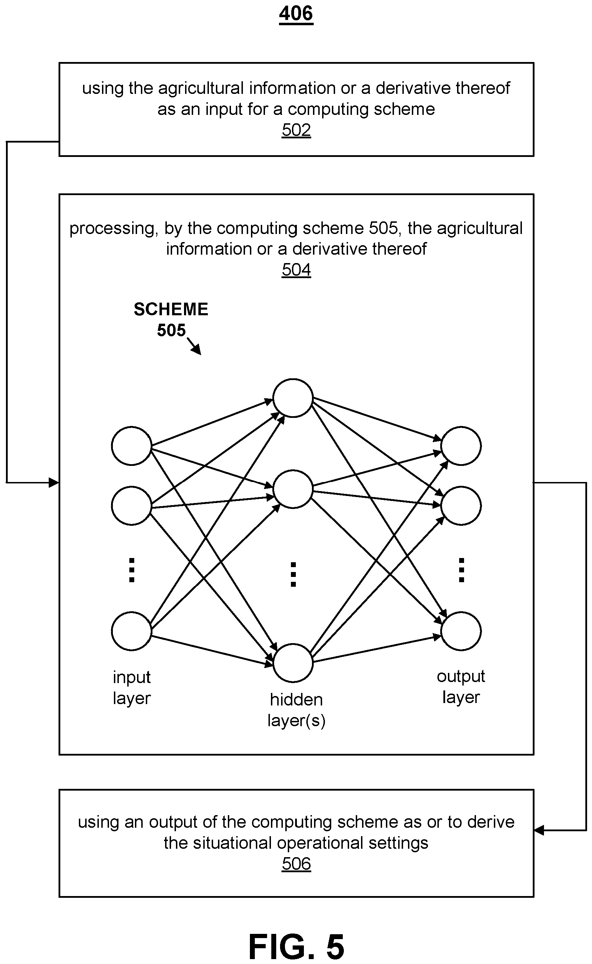

In some embodiments of the method, the determining of the situational operational settings includes using the agricultural information or a derivative thereof as an input to a computing scheme (e.g., see scheme 505 as well as step 502 shown in FIG. 5). Also, the determining of the situational operational settings includes using the computing scheme (e.g., see scheme 505) to process the agricultural information or the derivative thereof (e.g., see step 504 shown in FIG. 5). And, the determining of the situational operational settings also includes using an output of the computing scheme (e.g., see scheme 505) as or to derive the situational operational settings (e.g., see step 506). In some embodiments, the computing scheme (e.g., see scheme 505) includes an ANN. In some embodiments, the ANN is part of a deep learning process that determines the situational operational settings or is a basis for the determination of the situational operational settings. In some embodiments, the deep learning process includes a CNN. In some embodiments, the deep learning process includes a network of CNNs.

In some embodiments of the method, the request includes information similar to parts of the agricultural information recorded in the relational database (e.g., see relational database 103 shown in FIG. 1) used to select the at least one setting sent to the farming machine (e.g., see farming machine 106, 108, or 110).

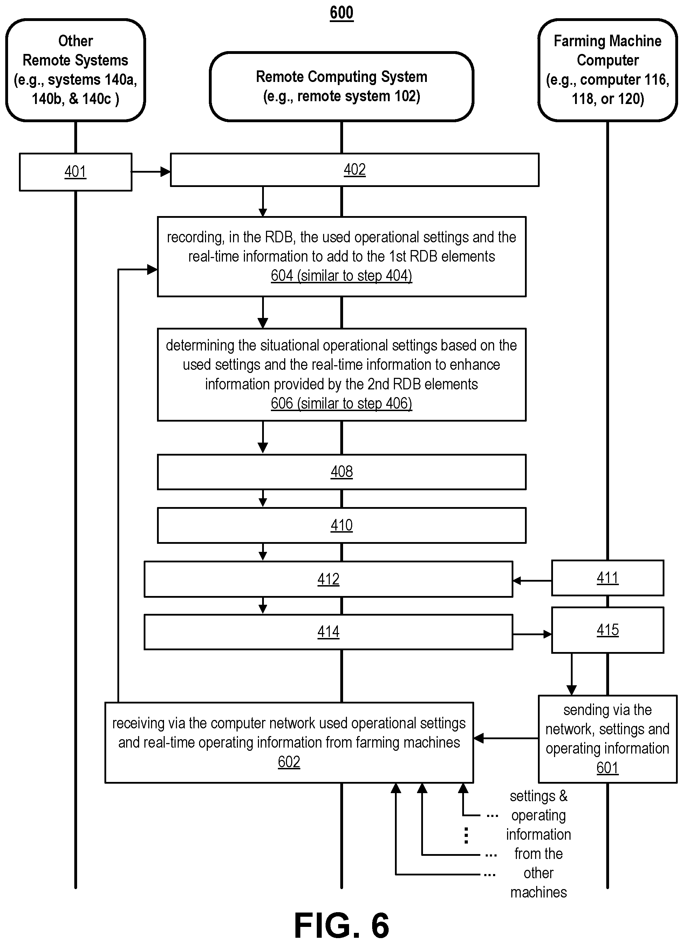

In some embodiments, the method includes receiving via the communications network (e.g., see communications network 104), by the remote computing system (e.g., see remote computing system 102), used operational settings from a plurality of farming machines (e.g., see farming machines 106, 108, and 110) as well as real-time operating information of the plurality of farming machines that is an outcome of the used operational settings (e.g., see step 602 shown if FIG. 6). Also, in such examples, the method includes recording in the relational database (e.g., see relational database 103), by the remote computing system (e.g., see remote computing system 102), the used operational settings and the real-time operating information to add to the first relational database elements (e.g., see step 604). And, in such examples, the method also includes further determining, by the remote computing system (e.g., see remote computing system 102), the situational operational settings based on the used operational settings and the real-time operating information to enhance information provided by the second relational database elements (e.g., see step 606).

In some embodiments of the method, the farming machine (e.g., see farming machine 106, 108, or 110 shown in FIG. 1), receiving the at least one setting sent from the remote computing system (e.g., see remote computing system 102), is one of the plurality of farming machines. In such examples, the at least one setting sent from the remote computing system (e.g., see remote computing system 102) causes at least one update in real-time operating information provided by the farming machine (e.g., see farming machine 106, 108, or 110) and eventually recorded in the relational database (e.g., see relational database 103). Also, in such examples, the updated real-time operating information is used, by the remote computing system (e.g., see remote computing system 102), to determine an updated version of the at least one setting.

In some embodiments, the used operational settings include settings adjusted for different crop varieties, different geographic regions, different weather conditions, different soil conditions, or any combination thereof. In some embodiments, the used operational settings include settings adjusted for different crop varieties, different geographic regions, different weather conditions, and different soil conditions. In some embodiments, the used operational settings include settings adjusted for different crop varieties. In some embodiments, the used operational settings include settings adjusted for different geographic regions. In some embodiments, the used operational settings include settings adjusted for different weather conditions. In some embodiments, the used operational settings include settings adjusted for different soil conditions.

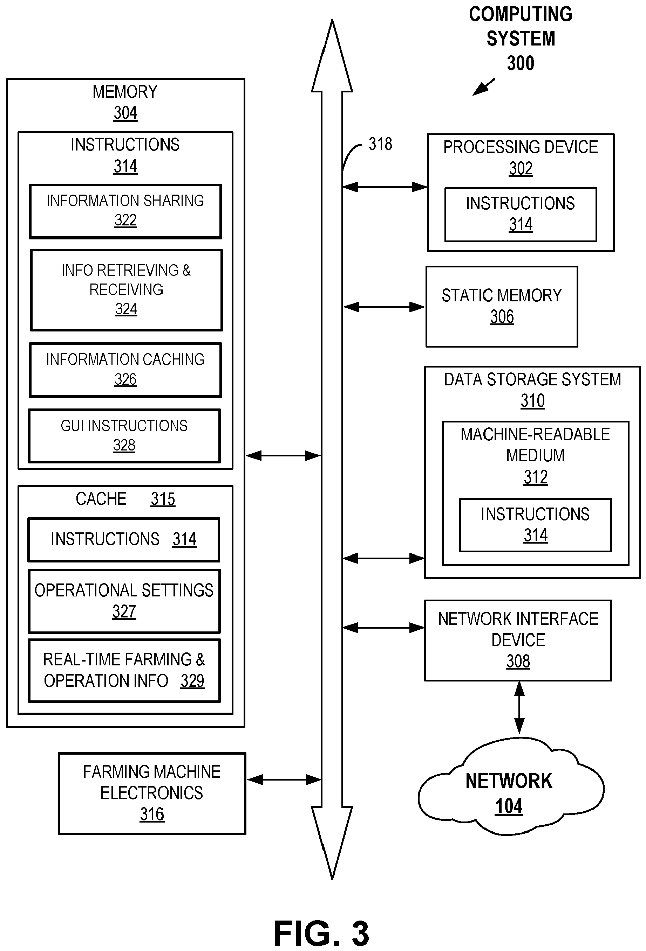

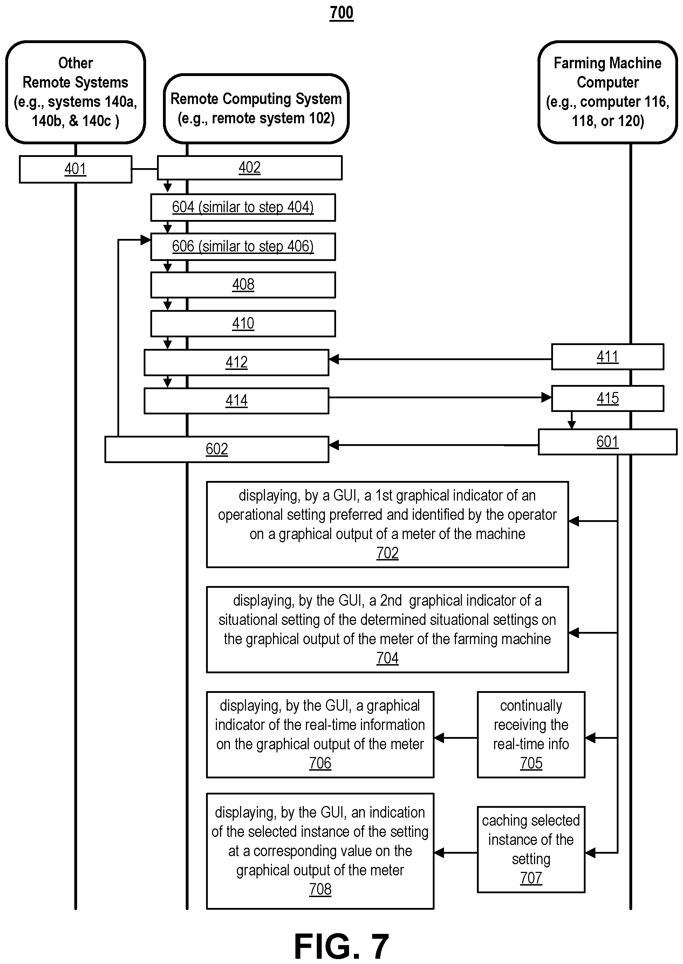

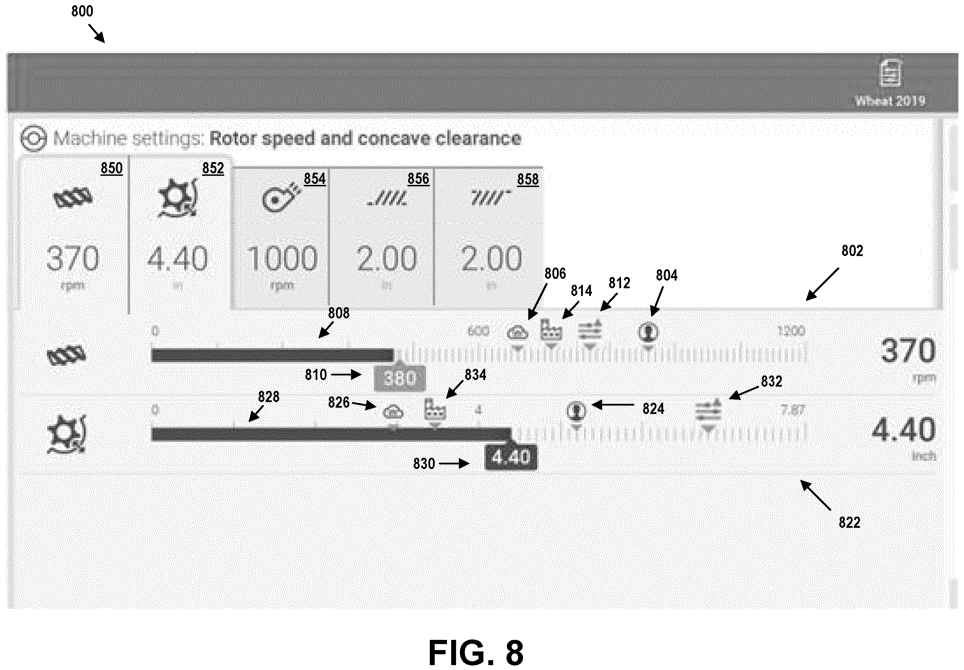

In some embodiments, the used operational settings include settings adjusted for a preference of the operator of the farming machine (e.g., see farming machine 106, 108, or 110 shown in FIG. 1). In some of such examples, the method includes displaying, by a graphical user interface (e.g., see GUI 800 shown in FIG. 8) rendered by the computer (e.g., see computer 116, 118, or 120 shown in FIG. 1) of the farming machine (e.g., see farming machine 106, 108, or 110), a graphical indicator of an operational setting preferred and identified by the operator (e.g., see graphical indicator 804) on a graphical output (e.g., see graphical output 802) of a meter (e.g., see farming machine electronics 316 shown in FIG. 3 or electronics 126, 128, or 130 shown in FIG. 1) of the farming machine (e.g., see farming machine 106, 108, or 110) corresponding to the operational setting (e.g., see step 702 shown in FIG. 7).

In some embodiments, the method includes displaying, by a graphical user interface (e.g., see GUI 800 shown in FIG. 8) rendered by the computer(e.g., see computer 116, 118, or 120 shown in FIG. 1) of the farming machine (e.g., see farming machine 106, 108, or 110), a first graphical indicator of an operational setting preferred and identified by the operator (e.g., see graphical indicator 804) on a graphical output (e.g., see graphical output 802) of a meter (e.g., see farming machine electronics 316 or electronics 126, 128, or 130) of the farming machine (e.g., see farming machine 106, 108, or 110) corresponding to the operational setting (e.g., see step 702 shown in FIG. 7). Also, in such examples, the method includes displaying, by the GUI (e.g., see GUI 800), a second graphical indicator of a situational setting (e.g., see graphical indicator 806) of the situational operational settings on the graphical output (e.g., see graphical output 802) of the meter (e.g., see farming machine electronics 316 or electronics 126, 128, or 130) of the farming machine (e.g., see farming machine 106, 108, or 110) corresponding to the operational setting (e.g., see step 704).

In some embodiments, the method includes continually receiving, by the computer (e.g., see computer 116, 118, or 120) of the farming machine (e.g., see farming machine 106, 108, or 110), real-time operating information from the meter (e.g., see farming machine electronics 316 or electronics 126, 128, or 130) corresponding to the operational setting (e.g., see step 705). Also, in such embodiments, the method includes displaying, by the GUI (e.g., see GUI 800), a graphical indicator of the real-time operating information (e.g., see graphical indicator 808) on the graphical output (e.g., see graphical output 802) of the meter (e.g., see farming machine electronics 316 or electronics 126, 128, or 130 as well as step 706). The graphical indicator of the real-time operating information (e.g., see indicator 808) changes its position or value in the graphical output (e.g., see output 802) of the meter as the real-time operating information changes during operation of the farming machine (e.g., see farming machine 106, 108, or 110).

In some embodiments, the method includes caching, by the computer (e.g., see computer 116, 118, or 120) of the farming machine (e.g., see farming machine 106, 108, or 110), a respective instance of the operational setting of the farming machine, wherein the respective instance of the operational setting is selected for operating the farming machine (e.g., see step 707). Also, in such embodiments, the method includes displaying, by the GUI (e.g., see GUI 800), an indication of the cached respective instance of the operational setting (e.g., see indicator 810) at a corresponding value on the graphical output (e.g., see output 802) of the meter (e.g., see farming machine electronics 316 or electronics 126, 128, or 130 as well as step 708).

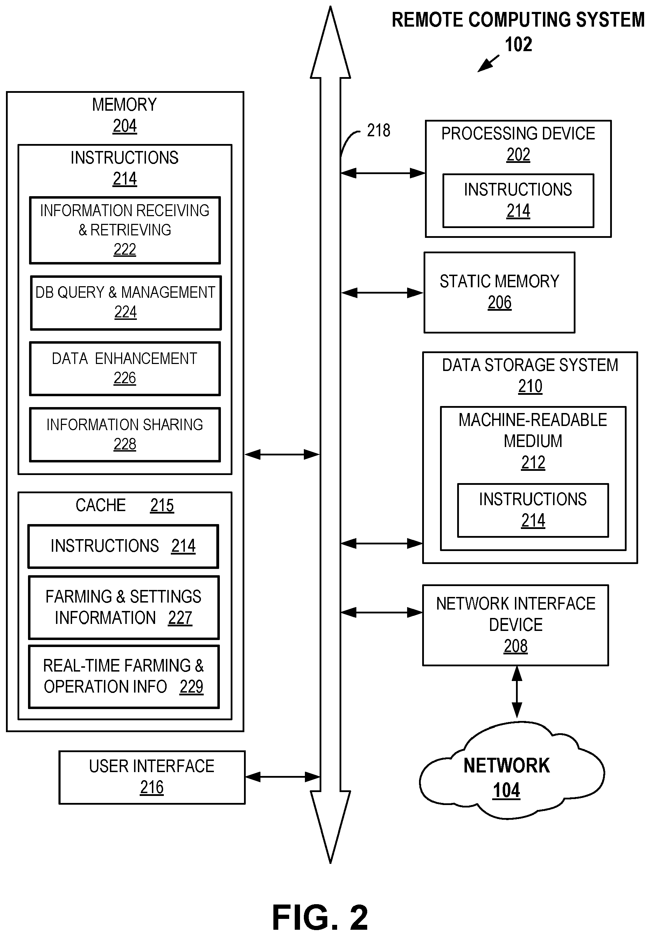

In some embodiments and in some systems of the technologies disclosed herein, any steps of embodiments of the methods described herein are implementable by executing instructions corresponding to the steps, which are stored and/or cached in memory (e.g., see instructions 214, 222, 224, 226, and 228 shown in FIG. 2 as well as instructions 314, 322, 324, 326, and 328 shown in FIG. 3).

In some embodiments, the graphical indicators of settings are movable (e.g., slidable), by a user, on the graphical output of a meter.

In enabling the enhancing and sharing of farming information and operational settings of farming machines, the systems and methods described herein overcome some technical problems in farming, in general, as well as some technical problems in precision agricultural and related GUIs used in farming. Also, the techniques disclosed herein provide specific technical solutions to at least overcome the technical problems mentioned in the background section or other parts of the application as well as other technical problems not described herein but recognized by those skilled in the art.

With respect to some embodiments, disclosed herein are computerized methods for enabling the enhancing and sharing of farming information and operational settings of farming machines, as well as a non-transitory computer-readable storage medium for carrying out technical operations of the computerized methods. The non-transitory computer-readable storage medium has tangibly stored thereon, or tangibly encoded thereon, computer readable instructions that when executed by one or more devices (e.g., one or more personal computers or servers) cause at least one processor to perform a method for improved systems and methods for enabling the enhancing and sharing of farming information and operational settings of farming machines.

With respect to some embodiments, a system is provided that includes at least one computing device configured to provide improved ways for enabling the enhancing and sharing of farming information and operational settings of farming machines. And, with respect to some embodiments, a method, such as one of the aforesaid methods, is provided to be performed by at least one computing device. In some example embodiments, computer program code can be executed by at least one processor of one or more computing devices to implement functionality in accordance with at least some embodiments described herein; and the computer program code being at least a part of or stored in a non-transitory computer-readable medium.

These and other important aspects of the invention are described more fully in the detailed description below. The invention is not limited to the particular methods and systems described herein. Other embodiments can be used and changes to the described embodiments can be made without departing from the scope of the claims that follow the detailed description.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

The present disclosure will be understood more fully from the detailed description given below and from the accompanying drawings of various embodiments of the disclosure. Embodiments of the invention will now be described, by way of example, with reference to the accompanying drawings, in which:
FIG. 1 illustrates an example network of farming machines that communicate with remote computing systems through a communications network, in accordance with some embodiments of the present disclosure;
FIG. 2 illustrates is a block diagram of example aspects of the remote computing system 102 shown in FIG. 1, in accordance with some embodiments of the present disclosure;
FIG. 3 illustrates is a block diagram of example aspects of a computer of a farming machine (such as one of computers 116, 118, and 120 shown in FIG. 1), in accordance with some embodiments of the present disclosure;
FIGS. 4 to 7 illustrate methods in accordance with some embodiments of the present disclosure; and
FIG. 8 illustrates an example graphical user interface (GUI), in accordance with some embodiments of the present disclosure.

### DETAILED DESCRIPTION OF EXAMPLE EMBODIMENTS

Details of example embodiments of the invention are described in the following detailed description with reference to the drawings. Although the detailed description provides reference to example embodiments, it is to be understood that the invention disclosed herein is not limited to such example embodiments. But to the contrary, the invention disclosed herein includes numerous alternatives, modifications and equivalents as will become apparent from consideration of the following detailed description and other parts of this disclosure.

FIG. 1 illustrates a network 100 of farming machines that communicate with remote computing systems through a communications network 104. Specifically, FIG. 1 illustrates the network 100 including a remote computing system 102, the communications network 104, farming machines (e.g., see farming machines 106, 108, and 110), and additional remote computing systems (e.g., see remote computing systems 140a, 140b, and 140c). The remote computing systems (e.g., see remote computing systems 102, 140a, 140b, and 140c) are remote in that each system is physically and geographically separated from the farming machines of the network 100. Each of the remote computing systems are connected to or include a relational database, also known as a RDB (e.g., see relational databases 103, 141a, 141b, and 141c). In some embodiments, each one of relational databases is managed by a respective relational database management system (RDBMS).

The farming machines are shown communicating with remote computing systems of the network 100 through a communications network 104. As shown in FIG. 1, the farming machines of the network 100 can each include its own computing system including electronics such as connected sensors, busses, and computers. A computing system of a farming machine can include a processor, memory, a communication interface and one or more sensors that can make the farming machines individual computing devices. In the case of the communications network 104 including the Internet, the farming machines of the network 100 are considered Internet of Things (IoT) devices. Also, in some embodiments, the remote computing systems are a part of a cloud computing system.

As shown in FIG. 1, each one of the farming machines includes a respective computer and respective electronics (e.g., see computers 116, 118, and 120, and see electronics 126, 128, and 130). In some embodiments, the electronics of a farming machine include electronic hardware and software of the farming machine such as sensors and other types of electrical and/or mechanical feedback devices that are communicatively coupled with the computer of the farming machine. And, in some embodiments, the computer of the farming machine is configured to connect or integrate with the farming machine electronics (e.g., see electronics 126, 128, and 130) and communicate with a remote computing system (such as at least one of the remote computing systems 102, 140a, 140b, and 140c) via the communications network 104.

In some embodiments, the farming machine (e.g., see farming machine 106, 108, or 110) includes a vehicle. In some embodiments, the farming machine is a combine harvester. In some embodiments, the farming machine is a tractor. In some embodiments, the farming machine is a planter. In some embodiments, the farming machine is a sprayer. In some embodiments, the farming machine is a baler. In some embodiments, the farming machine is or includes a harvester, a planter, a sprayer, a baler, any other type of farming implement, or any combination thereof. In such embodiments, the farming machine can be or include a vehicle in that is self-propelling. Also, in some embodiments, the group of similar farming machines is a group of vehicles (e.g., see farming machines 106, 108, and 110). In some embodiments, the group of vehicles is a group of combine harvesters. And, in some embodiments, the group of vehicles is a group of combine harvesters, planters, sprayers, balers, another type of implement, or any combination thereof.

The communications network 104 includes one or more local area networks (LAN(s)) and/or one or more wide area networks (WAN(s)). In some embodiments, the communications network 104 includes the Internet and/or any other type of interconnected communications network. The communications network 104 can also include a single computer network or a telecommunications network. More specifically, in some embodiments, the communications network 104 includes a local area network (LAN) such as a private computer network that connects computers in small physical areas, a wide area network (WAN) to connect computers located in different geographical locations, and/or a middle area network (MAN) to connect computers in a geographic area larger than that covered by a large LAN but smaller than the area covered by a WAN.

At least each shown component of the network 100 (including remote computing systems 102, 140a, 140b, and 140c, communications network 104, and farming machines 106, 108, and 110) can be or include a computing system which includes memory that includes media. The media includes or is volatile memory components, non-volatile memory components, or a combination of thereof. In general, in some embodiments, each of the computing systems includes a host system that uses memory. For example, the host system writes data to the memory and read data from the memory. The host system is a computing device that includes a memory and a data processing device. The host system includes or is coupled to the memory so that the host system reads data from or writes data to the memory. The host system is coupled to the memory via a physical host interface. The physical host interface provides an interface for passing control, address, data, and other signals between the memory and the host system.

FIG. 2 illustrates is a block diagram of example aspects of the remote computing system 102 shown in FIG. 1. FIG. 2 illustrates parts of the remote computing system 102 within which a set of instructions, for causing a machine (such as a computer processor or processing device 202) to perform any one or more of the methodologies discussed herein performed by a remote computing system, are executed (e.g., see method steps 402, 404, 406, 408, 410, 412, and 414 shown in FIG. 4 as well as steps 602, 604, and 606 shown in FIG. 6). In some embodiments, the remote computing system 102 operates with additional remote computing systems (e.g., see remote computing systems 140a, 140b, and 140c) to provide increased computing capacity in which multiple computing systems operate together to perform any one or more of the methodologies discussed herein that are performed by a remote computing system. In some embodiments, the remote computing system 102 corresponds to a host system that includes, is coupled to, or utilizes memory or is used to perform the operations performed by any one of the remote computing systems described herein. In some embodiments, the machine is connected (e.g., networked) to other machines in a LAN, an intranet, an extranet, or the Internet. In some embodiments, the machine operates in the capacity of a server in client-server network environment, as a peer machine in a peer-to-peer (or distributed) network environment, or as a server in a cloud computing infrastructure or environment. In some embodiments, the machine is a personal computer (PC), a tablet PC, a cellular telephone, a web appliance, a server, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein performed by remote computing systems.

The remote computing system 102 includes a processing device 202, a main memory 204 (e.g., read-only memory (ROM), flash memory, dynamic random-access memory (DRAM), etc.), a static memory 206 (e.g., flash memory, static random-access memory (SRAM), etc.), and a data storage system 210, which communicate with each other via a bus 218. The processing device 202 represents one or more general-purpose processing devices such as a microprocessor, a central processing unit, or the like. More particularly, the processing device can include a microprocessor or a processor implementing other instruction sets, or processors implementing a combination of instruction sets. Or, the processing device 202 is one or more special-purpose processing devices such as an application specific integrated circuit (ASIC), a field programmable gate array (FPGA), a digital signal processor (DSP), network processor, or the like. The processing device 202 is configured to execute instructions 214 for performing the operations discussed herein performed by a remote computing system. In some embodiments, the remote computing system 102 includes a network interface device 208 to communicate over the communications network 104 shown in FIG. 1.

The data storage system 210 includes a machine-readable storage medium 212 (also known as a computer-readable medium) on which is stored one or more sets of instructions 214 or software embodying any one or more of the methodologies or functions described herein performed by a remote computing system. The instructions 214 also reside, completely or at least partially, within the main memory 204 or within the processing device 202 during execution thereof by the remote computing system 102, the main memory 204 and the processing device 202 also constituting machine-readable storage media.

In some embodiments, the instructions 214 include specific instructions to implement functionality described herein related to the methods described herein and that can correspond to any one of the computing devices, data processors, user interface devices, and I/O devices described herein related to a remote computing system. For example, the instructions 214 include information receiving and retrieving instructions 222, database query and management instructions 224, data enhancement instructions 226, and information sharing instructions 228. In some embodiments, the data enhancement instructions include different types of data analysis libraries as well different types of data processing libraries--including various mathematical and statistical modeling and operations libraries and machine learning, artificial intelligence, and deep learning libraries as well as specific libraries for ANN and CNN data processing and for training ANNs, CNNs and other types of computing schemes or systems. In some embodiments, the instructions 214 are cached in the cache 215 just before or while being executed. Also, in some embodiments, farming and settings information 227 and real-time farming and operation information 229 are cached in the cache 215 just before or while being used by the remote computing system 102. In some instances, the farming and settings information 227 and the real-time farming and operation information 229 are included in the instructions 214 and are stored and/or hosted with the instructions.

While the machine-readable storage medium 212 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that cause the machine to perform any one or more of the methodologies of the present disclosure performed a remote computing system. The term "machine-readable storage medium" shall accordingly be taken to include solid-state memories, optical media, or magnetic media.

Also, as shown, remote computing system 102 includes user interface 216 that includes a display, in some embodiments, and, for example, implements functionality corresponding to any one of the user interface devices disclosed herein. A user interface, such as user interface 216, or a user interface device described herein includes any space or equipment where interactions between humans and machines occur. A user interface described herein allows operation and control of the machine from a human user, while the machine simultaneously provides feedback information to the user. Examples of a user interface (UI), or user interface device include the interactive aspects of computer operating systems (such as graphical user interfaces), machinery operator controls, and process controls. A UI described herein includes one or more layers, including a human-machine interface (HMI) that interfaces machines with physical input hardware and output hardware.

FIG. 3 illustrates is a block diagram of example aspects of a computing system 300 of a farming machine (which can include one of the computers 116, 118, and 120 and one plurality of the electronics 126, 128, and 130 shown in FIG. 1). FIG. 3 illustrates parts of the computing system 300 within which a set of instructions, for causing a machine (such as a computer processor or processing device 302) to perform any one or more of the methodologies discussed herein performed by a local computing system of a farming machine, are executed. In some embodiments, the computing system 300 corresponds to a host system that includes, is coupled to, or utilizes memory or is used to perform the operations performed by any one of the computing devices and data processors described herein related to a local computing system of a farming machine. In alternative embodiments, the machine is connected (e.g., networked) to other machines in a LAN, an intranet, an extranet, or the Internet. In some embodiments, the machine operates in the capacity of a client machine in client-server network environment, as a peer machine in a peer-to-peer (or distributed) network environment, or as a client machine in a cloud computing infrastructure or environment. In some embodiments, the machine is a personal computer (PC), a tablet PC, a cellular telephone, a web appliance, a server, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein related to a local computing system of a farming machine.

The computing system 300 includes a processing device 302, a main memory 304 that includes a cache 315 (e.g., memory made up of read-only memory (ROM), flash memory, dynamic random-access memory (DRAM), etc.), a static memory 306 (e.g., flash memory, static random-access memory (SRAM), etc.), and a data storage system 310, which communicate with each other via a bus 318. The processing device 302 represents one or more general-purpose processing devices such as a microprocessor, a central processing unit, or the like. More particularly, the processing device can include a microprocessor or a processor implementing other instruction sets, or processors implementing a combination of instruction sets. Or, the processing device 302 is one or more special-purpose processing devices such as an application specific integrated circuit (ASIC), a field programmable gate array (FPGA), a digital signal processor (DSP), network processor, or the like. The processing device 302 is configured to execute instructions 314 for performing the operations discussed herein performed by a local computing system of a farming machine. In some embodiments, the computing system 300 includes a network interface device 308 to communicate over the communications network 104 shown in FIG. 1.

The data storage system 310 includes a machine-readable storage medium 312 (also known as a computer-readable medium) on which is stored one or more sets of instructions 314 or software embodying any one or more of the methodologies or functions described herein performed by a local computing system of a farming machine. The instructions 314 also reside, completely or at least partially, within the main memory 304 (such as within the cache 315) or within the processing device 302 during execution thereof by the computing system 300, the main memory 304 and the processing device 302 also constituting machine-readable storage media.

Also, as shown, the computing system 300 includes farming machine electronics 316 that includes sensors or other types of electrical and/or mechanical feedback devices, one or more user interfaces (e.g., any one of the UI described herein), and any type of computer hardware and software configured to interface and communicatively couple to operational components of a farming machine (e.g., see electronics 126, 128, and 130). Also, in some embodiments, the farming machine electronics 316 as well as the electronics 126, 128, and 130 include any one of the meters described herein. Furthermore, each group of electronics of the farming machine electronics 316 as well as the electronics 126, 128, and 130 includes a display and/or another type of user interface, and, for example, such a user interface implements functionality corresponding to any one of the user interface devices disclosed herein. A user interface, such as the one included with farming machine electronics 316 or any user interface device described herein, includes any space or equipment where interactions between humans and machines occur.

In some embodiments, the instructions 314 include instructions to implement functionality corresponding to any one of the computing devices, data processors, user interface devices, and I/O devices described herein related to a local computing system of a farming machine. For example, the instructions 314 include information sharing instructions 322, information retrieving and receiving instructions 324, information caching instructions 326, and GUI instructions 328. In some embodiments, the instructions 314 are cached in the cache 315 just before or while being executed. Also, in some embodiments, operational settings 327 and real-time farming and operation information 329 are cached in the cache 315 just before or while being used by the computing system 300. In some instances, the operational settings 327 and the real-time farming and operation information 329 are included in the instructions 314 and are stored and/or hosted with the instructions.

While the machine-readable storage medium 312 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that cause the machine to perform any one or more of the methodologies of the present disclosure performed a local computing system of a farming machine. The term "machine-readable storage medium" shall accordingly be taken to include solid-state memories, optical media, or magnetic media.

As mentioned, in some systems of the technologies disclosed herein, any steps of embodiments of the methods described herein are implementable by executing instructions corresponding to the steps, which are stored and/or cached in memory (e.g., see instructions 214, 222, 224, 226, and 228 shown in FIG. 2 as well as instructions 314, 322, 324, 326, and 328 shown in FIG. 3).

Some embodiments include a system including remote systems (such as a primary remote system, e.g., remote computing system 102, as well as other remote systems that can back up the primary remote system or that provide farming information to the primary remote system, e.g., remote computing systems 140a, 140b, and 140c). Such a system also includes local computers of farming machines communicatively coupled to the remote computing systems via a communications network (e.g., see computers 116, 118, and 120 and communications network 104). The remote computing systems communicate with each other as do the computers of the farming machines through the communications network, e.g., see FIG. 1.

In some embodiments of the system, at least one of the other remote computing systems (e.g., see remote computing systems 140a, 140b, and 140c shown in FIG. 1) includes instructions stored in memory and configured to share agricultural information by sending, via the communications network (e.g., see communications network 104), the agricultural information to the remote computing system (also referred herein as a primary remote computing system), e.g., see remote computing system 102. The primary remote computing system (e.g., see remote computing system 102) includes instructions stored in memory and configured to receive (or retrieve from other computing systems and computers) via the communications network (e.g., see communications network 104), agricultural information (e.g., see farming and settings information 227 shown in FIG. 3), including the agricultural information sent from the at least one other remote computing system. The agricultural information includes prescribed operational settings for farming machines (e.g., see farming machines 106, 108, and 110), crop variety information, and environmental information that includes weather condition factors and soil condition factors.

In some embodiments of the systems and methods described herein, the agricultural information includes farming machine settings. Storing such settings via the databases described herein provide for many permutations of inputs for machine settings configurations than could be stored on a machine itself. The databases are either interfaced with directly by a user though a web interface for pre-planning the settings or indirectly by a farming machine automatically requesting the settings via its computer.

Also, in some embodiments, the agricultural information can include crop variety based settings. The databases can use crop variety information to refine the default settings recommendations. With a web interface or connection with an FMIS vendor, the user would be able to configure which crop varieties they use in which fields. These varieties linked with genetic information from the seed producer can produce a classification system for "ease of threshing", "dry down", "standability", and etc. Such information is useable by the technologies described herein to derive machine settings, such as derive a machines settings file, which can be loaded onto a computer of a farming machine using either the user provided settings or a reference from the seed producer (such as for factory setting offsets). The operator can configure the crop variety on the UI of the computer, an aspects of the system can query the appropriate settings from a database.

Also, in some embodiments, the agricultural information can include regional based settings. Regional based settings can include a combination of information from an FMIS or web interface, and a geospatial reference of a field could be entered to pre-plan the settings (based on available inputs) and have a computer of a farming machine automatically detect the field and pull down the planned settings from a database when the machine arrives in the field. In some examples, regional based settings can also be based on different farming practices in different areas in that the settings are adjusted according to anticipated crop condition changes due to different regional farming practices. Some of the regional conditions can include environmental conditions such as typical soil conditions, weather patterns, etc. that have a known impact on the crop properties and thus operating conditions.

Also, in some embodiments, the agricultural information can include environmental based settings. The databases can include such settings that account for live and forecasted environmental conditions to further refine machine settings. When considering data, such as humidity, temperature, and wind speed data, aspects of technologies can refine the recommended default settings on a daily, hourly, or an even shorter interval basis.

Also, in some embodiments, the agricultural information can include settings based on other types of farming information or agricultural information. Furthermore, the agricultural information and the settings used by the technologies described herein can be enhanced via artificial intelligence systems and machine learning. The information and the settings, stored in the databases, can be continually improved by artificial intelligence systems and machine learning in some embodiments. For example, based on telemetry data of machines, the database could analyze how the settings used differ from what was or would have been recommend. This can ever further be enhanced when considering machines using an automated adjustments system as there can be more confidence in the settings from it compared to a manual setting. Machine learning and artificial intelligence can also be used to detect different variables (e.g., regional, environmental, machine variations, etc.) not currently used by known databases to enhance inputs to obtain enhanced settings recommendations. Moreover, the settings can be personalized or generalized for a farming machine. For example, by analyzing how a particular user's settings differ from the recommendations, aspects of the technologies can generate profiles that modify the recommendations for individual users. This can be separated from the standard permutations to allow both personalized generalized recommend settings to be supported by the technologies.

Also, in some embodiments, new embedded display concepts for farming machines is provided with graphical sliders associated with different versions of operational settings of a farming machine. Via the display, an operator is made aware of the different versions of operational settings and when a database, e.g., in the cloud, is providing a value for a setting, an icon for a slider becomes a cloud (or another type of graphical indication of remote computing) with an inset settings icon. This cloud icon will move as the data from the database updates in some embodiments. E.g., see the GUI 800 shown in FIG. 8.

The primary remote computing system (e.g., see remote computing system 102) also includes instructions stored in memory and configured to record the agricultural information as first relational database elements in a relational database (e.g., see relational database 103 shown in FIG. 1 as well as database query and management instructions 224 shown in FIG. 2). The primary remote computing system also includes instructions stored in memory and configured to determine situational operational settings based on the recorded agricultural information (e.g., see data enhancement instructions 226 shown in FIG. 2) as well as record the situational operational settings as second relational database elements in the relational database (e.g., see relational database 103 and database query and management instructions 224 as well as farming and settings information 227). The primary remote computing system also includes instructions stored in memory and configured to link the second relational database elements to the first relational database elements according to inputs of the determinations of the situational operational settings (e.g., see database query and management instructions 224). The primary remote computing system also includes instructions stored in memory and configured to select at least one setting of the recorded situational operational settings according to a database query based on or included in a request sent from a computer (e.g., see computer 116, 118, or 120) of a farming machine (e.g., see farming machine 106, 108, or 110 as well as database query and management instructions 224). The primary remote computing system also includes instructions stored in memory and configured to send, via the communications network (e.g., see communications network 104), the at least one setting to the farming machine (e.g., see farming machine 106, 108, or 110) according to the request (e.g., see information sharing instructions 228). In some of such embodiments, the local computer of the farming machine (e.g., see computer 116, 118, or 120) includes instructions stored in memory and configured to send the request via the communications network (e.g., see information sharing instructions 322). Also, the local computer of the farming machine includes instructions stored in memory and configured to receive (or in so examples retrieve) the setting(s) via the communications network (e.g., see information retrieving and receiving instructions 324). Also, the local computer of the farming machine includes instructions stored in memory and configured to cache the setting(s) (e.g., see information caching instructions 326) as well as display the setting(s) via a GUI (e.g., see GUI instructions 328).

In some embodiments of the system, the determination of the situational operational settings includes using the agricultural information or a derivative thereof (e.g., see farming and settings information 227 shown in FIG. 2) as an input to a computing scheme (e.g., see scheme 505 and step 502 shown in FIG. 5 as well as data enhancement instructions 226). Also, the determination of the situational operational settings includes using the computing scheme (e.g., see scheme 505) to process the agricultural information or the derivative thereof (e.g., see step 504 shown in FIG. 5 as well as data enhancement instructions 226). And, the determining of the situational operational settings also includes using an output of the computing scheme (e.g., see scheme 505) as or to derive the situational operational settings (e.g., see step 506 as well as data enhancement instructions 226). In some embodiments, the computing scheme (e.g., see scheme 505) includes an ANN. In some embodiments, the ANN is part of a deep learning process that determines the situational operational settings or is a basis for the determination of the situational operational settings. In some embodiments, the deep learning process includes a CNN. In some embodiments, the deep learning process includes a network of CNNs.

In some embodiments of the system, the request includes information similar to parts of the agricultural information recorded in the relational database (e.g., see relational database 103 shown in FIG. 1 as well as the farming and settings information 227 shown in FIG. 2) used to select the at least one setting sent to the farming machine (e.g., see farming machine 106, 108, or 110).

In some embodiments, the primary remote computing system, e.g., see remote computing system 102, also includes instructions stored in memory and configured to receive, via the communications network (e.g., see communications network 104), used operational settings from a plurality of farming machines (e.g., see farming machines 106, 108, and 110) as well as real-time operating information of the plurality of farming machines that is an outcome of the used operational settings (e.g., see information receiving and retrieving instructions 222 as well as farming and settings information 227 and real-time farming and operation information 229). Also, in such examples, the primary remote computing system, e.g., see remote computing system 102, also includes instructions stored in memory and configured to record, in the relational database (e.g., see relational database 103), the used operational settings and the real-time operating information to add to the first relational database elements (e.g., see database query and management instructions 224 and farming and settings information 227 and real-time farming and operation information 229). And, in such examples, the primary remote computing system also includes instructions stored in memory and configured to determine the situational operational settings based on the used operational settings and the real-time operating information to enhance information provided by the second relational database elements (e.g., see data enhancement instructions 226). In some of such embodiments, the local computer of the farming machine (e.g., see computer 116, 118, or 120) includes instructions stored in memory and configured to send, via the network (e.g., see communications network 104), the used settings and operating information (e.g., see information sharing instructions 322 as well as operational settings 327 and real-time farming and operation information 329). Also, other computers in a group of farming machines can include such instructions.

In some embodiments of the system, the computer of the farming machine (e.g., see computer 116, 118, or 120 shown in FIG. 1), receiving the at least one setting sent from the remote computing system (e.g., see remote computing system 102), is one of the plurality of farming machines. In such examples, the at least one setting sent from the remote computing system (e.g., see remote computing system 102) causes at least one update in real-time operating information provided by the farming machine (e.g., see farming machine 106, 108, or 110 as well as real-time farming and operation information 329) and eventually recorded in the relational database (e.g., see relational database 103). Also, in such examples, the updated real-time operating information is used with instructions of the remote computing system, to determine an updated version of the at least one setting (e.g., see data enhancement instructions 226 and real-time farming and operation information 229).

In some embodiments, the used operational settings include settings adjusted for different crop varieties, different geographic regions, different weather conditions, different soil conditions, or any combination thereof (e.g., see farming and settings information 227 and real-time farming and operation information 229 shown in FIG. 2 as well as operational settings 327 and operation information 329 shown in FIG. 3). In some embodiments, the used operational settings include settings adjusted for different crop varieties, different geographic regions, different weather conditions, and different soil conditions. In some embodiments, the used operational settings include settings adjusted for different crop varieties. In some embodiments, the used operational settings include settings adjusted for different geographic regions. In some embodiments, the used operational settings include settings adjusted for different weather conditions. In some embodiments, the used operational settings include settings adjusted for different soil conditions.

In some embodiments, the used operational settings include settings adjusted for a preference of the operator of the farming machine (e.g., see farming machine 106, 108, or 110 shown in FIG. 1 as well as farming and settings information 227 and real-time farming and operation information 229 shown in FIG. 2 as well as operational settings 327 and operation information 329 shown in FIG. 3). In some of such examples, the local computer of the farming machine (e.g., see computer 116, 118, or 120) includes instructions stored in memory and configured to display, by a GUI (e.g., see GUI 800 shown in FIG. 8) rendered by the computer, a graphical indicator of an operational setting preferred and identified by the operator (e.g., see graphical indicator 804) on a graphical output (e.g., see graphical output 802) of a meter (e.g., see farming machine electronics 316 shown in FIG. 3 or electronics 126, 128, or 130 shown in FIG. 1) of the farming machine (e.g., see farming machine 106, 108, or 110) corresponding to the operational setting (e.g., see GUI instructions 328 shown in FIG. 3).

In some embodiments, the local computer of the farming machine (e.g., see computer 116, 118, or 120) includes instructions stored in memory and configured to display, by the GUI (e.g., see GUI 800 shown in FIG. 8) rendered by the computer, a first graphical indicator of an operational setting preferred and identified by the operator (e.g., see graphical indicator 804) on a graphical output (e.g., see graphical output 802) of a meter (e.g., see farming machine electronics 316 or electronics 126, 128, or 130) of the farming machine (e.g., see farming machine 106, 108, or 110) corresponding to the operational setting (e.g., see GUI instructions 328 shown in FIG. 3). Also, in such examples, the local computer of the farming machine includes instructions stored in memory and configured to display, by the GUI, a second graphical indicator of a situational setting (e.g., see graphical indicator 806) of the situational operational settings on the graphical output (e.g., see graphical output 802) of the meter of the farming machine corresponding to the operational setting (e.g., see GUI instructions 328).

In some embodiments, the local computer of the farming machine (e.g., see computer 116, 118, or 120) includes instructions stored in memory and configured to continually receive real-time operating information from the meter (e.g., see farming machine electronics 316 or electronics 126, 128, or 130) corresponding to the operational setting (e.g., see information retrieving and receiving instructions 324 as well as operational settings 327 and real-time farming and operation information 329). Also, in such embodiments, the local computer of the farming machine (e.g., see computer 116, 118, or 120) includes instructions stored in memory and configured to display, by the GUI (e.g., see GUI 800), a graphical indicator of the real-time operating information (e.g., see graphical indicator 808) on the graphical output (e.g., see graphical output 802) of the meter (e.g., see farming machine electronics 316 or electronics 126, 128, or 130 as well as GUI instructions 328). The graphical indicator of the real-time operating information (e.g., see indicator 808) changes its position or value in the graphical output (e.g., see output 802) of the meter as the real-time operating information changes during operation of the farming machine (e.g., see farming machine 106, 108, or 110).

In some embodiments, the local computer of the farming machine (e.g., see computer 116, 118, or 120) includes instructions stored in memory and configured to cache a respective instance of the operational setting of the farming machine (e.g., see information caching instructions 326 and operational settings 327). The respective instance of the operational setting is selected for operating the farming machine. Also, in such embodiments, the local computer of the farming machine (e.g., see computer 116, 118, or 120) includes instructions stored in memory and configured to display, by the GUI (e.g., see GUI 800), an indication of the cached respective instance of the operational setting (e.g., see indicator 810) at a corresponding value on the graphical output (e.g., see farming machine electronics 316 or electronics 126, 128, or 130 as well as GUI instructions 328).

FIGS. 4 to 7 illustrate methods 400, 600, and 700, respectively, in accordance with various embodiments of the present disclosure. Methods 400, 600, and 700 are perform by remote computing systems (a primary remote computing system, e.g., see remote computing system 102 as shown in FIG. 1, and secondary remote computing systems, e.g., see remote computing systems 140a, 140b, and 140c as depicted in FIG. 1) as well as respective computers of farming machines (e.g., see computers 116, 118, and 120 as depicted in FIG. 1). For the sake of simplicity, the methods 400, 600, and 700 will be described, for the most part, as being performed by a remote computing system (i.e., the primary remote computing system), other remote systems (i.e., the secondary remote computing systems) and a farming machine computer (i.e., one of the respective computers of the farming machines).

As shown in FIG. 4, method 400 begins with step 401, which includes sending, by the other remote systems, agricultural information via a network (e.g., see communications network 104 shown in FIG. 1). The method 400 continues with step 402, which includes receiving via the network, by the remote computing system (e.g., see remote computing system 102), agricultural information including prescribed operational settings for farming machines (e.g., see farming machines 106, 108, and 110), crop variety information, and environmental information that includes weather condition factors and soil condition factors. The method 400 continues with step 404, which includes recording, by the remote computing system, the agricultural information as first relational database elements in a relational database (e.g., see relational database 103). The method 400 continues with step 406, which includes determining, by the remote computing system, situational operational settings based on the recorded agricultural information. The method 400 continues with step 408, which includes recording, by the remote computing system, the situational operational settings as second relational database elements in the relational database. The method 400 continues with step 410, which includes linking, by the remote computing system, the second relational database elements to the first relational database elements according to inputs of the determinations of the situational operational settings. The method 400 continues with step 411, which includes sending, by a farming machine computer (e.g., see computer 116, 118, or 120) of a farming machine (e.g., see farming machine 106, 108, or 110), a request via the network. The method 400 continues with step 412, which includes selecting, by the remote computing system, at least one setting of the recorded situational operational settings according to a database query based on or included in the request sent from the farming machine computer of the farming machine computer. The method 400 continues with step 414, which includes sending via the communications network, by the remote computing system, the at least one setting to the farming machine computer according to the request. At step 415, the method includes receiving via the communications network, by the farming machine computer, the at least one setting.

In some embodiments of the method 400, the determining of the situational operational settings, at step 406, includes using the agricultural information or a derivative thereof as an input to a computing scheme (e.g., see scheme 505 as well as step 502 shown in FIG. 5). Also, the determining of the situational operational settings, at step 406, includes using the computing scheme (e.g., see scheme 505) to process the agricultural information or the derivative thereof (e.g., see step 504 shown in FIG. 5). And, the determining of the situational operational settings, at step 406, also includes using an output of the computing scheme (e.g., see scheme 505) as or to derive the situational operational settings (e.g., see step 506). In some embodiments, the computing scheme (e.g., see scheme 505) includes an ANN. In some embodiments, the ANN is part of a deep learning process that determines the situational operational settings or is a basis for the determination of the situational operational settings. In some embodiments, the deep learning process includes a CNN. In some embodiments, the deep learning process includes a network of CNNs.

In some embodiments of the method 400, the request includes information similar to parts of the agricultural information recorded in the relational database (e.g., see relational database 103 shown in FIG. 1) used to select the at least one setting sent to the farming machine computer (e.g., see computer 116, 118, or 120).

The method 600, shown in FIG. 6, includes the steps of method 400 as well as step 601 that occurs subsequent to step 415 of method 400 and includes sending to the remote computing system (e.g., see remote computing system 102), via the communications network (e.g., see communications network 104), by the farming computer (e.g., see computer 116, 118, or 120), used operational settings from the farming machine, which in one machine in a plurality of farming machines (e.g., see farming machines 106, 108, and 110), as well as real-time operating information of the farming machine that is an outcome of the used operational settings. Also, as shown in FIG. 6, each one of the plurality of farming machines can send such information and settings to the remote computing system as well. The method 600 then continues with, at step 602, receiving via the communications network, by the remote computing system, used operational settings from a plurality of farming machines (e.g., see farming machines 106, 108, and 110) as well as real-time operating information of the plurality of farming machines that is an outcome of the used operational settings. Also, in such examples, the method 600 includes, at step 604 (which is somewhat similar to step 404) recording in the relational database (e.g., see relational database 103), by the remote computing system, the used operational settings and the real-time operating information to add to the first relational database elements. And, in such examples, the method 600 includes, at step 606 (which is somewhat similar to step 406) further determining, by the remote computing system, the situational operational settings based on the used operational settings and the real-time operating information to enhance information provided by the second relational database elements.

As mentioned, the farming machine computer (e.g., see computer 116, 118, or 120 shown in FIG. 1), receiving the at least one setting sent from the remote computing system (e.g., see remote computing system 102), is one of a plurality of farming machines. In such examples, the at least one setting sent from the remote computing system causes at least one update in real-time operating information provided by the farming machine computer (e.g., see computer 116, 118, or 120) and eventually recorded in the relational database (e.g., see relational database 103). Also, in such examples, the updated real-time operating information is used, by the remote computing system (e.g., see remote computing system 102), to determine an updated version of the at least one setting (e.g., see the combination of methods 400 and 600 as shown in FIGS. 4 and 6).

In some embodiments, the used operational settings include settings adjusted for different crop varieties, different geographic regions, different weather conditions, different soil conditions, or any combination thereof. In some embodiments, the used operational settings include settings adjusted for different crop varieties, different geographic regions, different weather conditions, and different soil conditions. In some embodiments, the used operational settings include settings adjusted for different crop varieties. In some embodiments, the used operational settings include settings adjusted for different geographic regions. In some embodiments, the used operational settings include settings adjusted for different weather conditions. In some embodiments, the used operational settings include settings adjusted for different soil conditions. In some embodiments, the used operational settings include settings adjusted for a preference of the operator of the farming machine (e.g., see farming machine 106, 108, or 110 shown in FIG. 1).

As shown in FIG. 7, the method 700 includes the steps of methods 400 and 600 as well as step 702 which includes displaying, by a graphical user interface (e.g., see GUI 800 shown in FIG. 8) rendered by the farming machine computer (e.g., see computer 116, 118, or 120), a first graphical indicator of an operational setting preferred and identified by the operator (e.g., see graphical indicator 804) on a graphical output (e.g., see graphical output 802) of a meter (e.g., see farming machine electronics 316 or electronics 126, 128, or 130) of the farming machine (e.g., see farming machine 106, 108, or 110) corresponding to the operational setting. Also, as shown, the method 700 includes, at step 704, displaying, by the GUI, a second graphical indicator of a situational setting (e.g., see graphical indicator 806) of the situational operational settings on the graphical output (e.g., see graphical output 802) of the meter of the farming machine corresponding to the operational setting. Also, as shown in FIG. 7, the method 700 includes, at step 705, continually receiving, by the farming machine computer, real-time operating information from the meter corresponding to the operational setting. Also, the method 700 includes, at step 706, displaying, by the GUI, a graphical indicator of the real-time operating information (e.g., see graphical indicator 808) on the graphical output of the meter. The graphical indicator of the real-time operating information changes its position or value in the graphical output of the meter as the real-time operating information changes during operation of the farming machine.

The method 700 also includes, at step 707, caching, by the farming machine computer (e.g., see computer 116, 118, or 120), a respective instance of the operational setting of the farming machine (e.g., see farming machine 106, 108, or 110). The respective instance of the operational setting is selected for operating the farming machine. Also, the method 700 includes, at step 708, displaying, by the GUI (e.g., see GUI 800), an indication of the cached respective instance of the operational setting (e.g., see indicator 810) at a corresponding value on the graphical output (e.g., see output 802) of the meter (e.g., see farming machine electronics 316 or electronics 126, 128, or 130).

FIG. 8 illustrates a GUI 800, in accordance with some embodiments of the present disclosure. The GUI 800 is shown including graphical output 802 (which is a graphical output of a meter that measures speed of a rotor of a farming machine in revolutions per minute (RPM)), graphical indicator 804 (which is a graphical indicator of an operational setting preferred and identified by an operator of the machine), graphical indicator 806 (which is a graphical indicator of a determined and shared situational setting determined and shared by a remote computing system), graphical indicator 808 (which is a graphical indicator of the real-time operating information of rotor speed), graphical indicator 810 (which is an indication of a selected and cached instance of the operational setting being employed at the time), graphical indicator 812 (which is an indication of an M2M shared and cached instance of the operational setting in which the setting was shared directly from a similar farming machine over a communications network), and graphical indicator 814 (which is an indication of a manufacturer recommended value of the operational setting of rotor speed). The GUI 800 is shown including a similar graphical meter output 822 and graphical indicators 824, 826, 828, 830, 832, and 834, but for depicting information on threshing gap of the farming machine instead of rotor speed.

Also, as shown in the GUI 800 depicted in FIG. 8 there are five operations of the machine being displayed by five respective tabs of the GUI (see tabs 850, 852, 854, 856, and 858). In FIG. 8, the tabs 850 and 852 associated with rotor speed and threshing gap, respectively, are selected and actively providing information beyond the real-time operating information for the rotor speed and threshing gap. Whereas, the tabs associated with other operations of the machine are not selected and not actively providing information beyond respective real-time operating information. For example, tab 854 displays real-time cleaning fan speed but not any additional information on cleaning fan speed settings. Although, as shown, all the tabs being displayed provide corresponding real-time operating information.

In some embodiments, an operational setting (e.g., see farming and settings information 227 and 327) is a rotor speed, a threshing gap, a cleaning fan speed, a chaffer opening gap, a sieve opening gap, a downforce pressure of a planter, a pump pressure of a sprayer, a boom height, a driving speed, a conditioning roller pressure on a windrower, a flake size on a square baler, or some other type of operational setting of a farming machine. It is to be understood that the aforementioned operational settings described herein are just some of the many different types of operational settings applicable to this disclosure.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a predetermined result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities. The present disclosure can refer to the action and processes of a computing system, or similar electronic computing device, which manipulates and transforms data represented as physical (electronic) quantities within the computing system's registers and memories into other data similarly represented as physical quantities within the computing system memories or registers or other such information storage systems.

The present disclosure also relates to an apparatus for performing the operations herein. This apparatus can be specially constructed for the intended purposes, or it can include a general-purpose computer selectively activated or reconfigured by a computer program stored in the computer. Such a computer program can be stored in a computer readable storage medium, such as any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, each coupled to a computing system bus.

The algorithms and displays presented herein are not inherently related to any particular computer or other apparatus. Various general-purpose systems can be used with programs in accordance with the teachings herein, or it can prove convenient to construct a more specialized apparatus to perform the methods. The structure for a variety of these systems will appear as set forth in the description herein. In addition, the present disclosure is not described with reference to any particular programming language. It will be appreciated that a variety of programming languages can be used to implement the teachings of the disclosure as described herein.

The present disclosure can be provided as a computer program product, or software, which can include a machine-readable medium having stored thereon instructions, which can be used to program a computing system (or other electronic devices) to perform a process according to the present disclosure. A machine-readable medium includes any mechanism for storing information in a form readable by a machine (e.g., a computer). In some embodiments, a machine-readable (e.g., computer-readable) medium includes a machine (e.g., a computer) readable storage medium such as a read only memory ("ROM"), random access memory ("RAM"), magnetic disk storage media, optical storage media, flash memory components, etc.

While the invention has been described in conjunction with the specific embodiments described herein, it is evident that many alternatives, combinations, modifications and variations are apparent to those skilled in the art. Accordingly, the example embodiments of the invention, as set forth herein are intended to be illustrative only, and not in a limiting sense. Various changes can be made without departing from the spirit and scope of the invention.

## Claims

1. A method, comprising:
receiving via a communications network (104), by a remote computing system (102), agricultural information including prescribed operational settings for farming machines (106, 108, and 110), crop variety information, and environmental information that includes weather condition factors and soil condition factors (step 402);
recording, by the remote computing system (102), the agricultural information as first relational database elements in a relational database (103) (step 404);
determining, by the remote computing system (102), situational operational settings based on the recorded agricultural information (step 406);
recording, by the remote computing system (102), the situational operational settings as second relational database elements in the relational database (103) (step 408);
linking, by the remote computing system (102), the second relational database elements to the first relational database elements according to inputs of the determinations of the situational operational settings (step 410);
selecting, by the remote computing system (102), at least one setting of the recorded situational operational settings according to a database query based on or included in a request sent from a computer (116, 118, or 120) of a farming machine (106, 108, or 110) (step 412); and
sending via the communications network (104), by the remote computing system (102), the at least one setting to the farming machine (106, 108, or 110) according to the request (step 414).

2. The method of claim 1,
wherein the determining the situational operational settings includes using the agricultural information or a derivative thereof as an input to a computing scheme (505) (step 502),
wherein the determining the situational operational settings includes using the computing scheme (505) to process the agricultural information or the derivative thereof (step 504), and
wherein the determining the situational operational settings also includes using an output of the computing scheme (505) as or to derive the situational operational settings (step 506).

3. The method of claim 2, wherein the computing scheme (505) includes an artificial neural network (ANN).

4. The method of claim 3, wherein the ANN is part of a deep learning process that determines the situational operational settings or is a basis for the determination of the situational operational settings.

5. The method of claim 4, wherein the deep learning process includes a convolutional neural network (CNN).

6. The method of claim 4, wherein the deep learning process includes a network of convolutional neural networks (CNNs).

7. The method of any of claims 1 through 6, wherein the request includes information similar to parts of the agricultural information recorded in the relational database (103) used to select the at least one setting sent to the farming machine (106, 108, or 110).

8. The method of any of claims 1 through 7, further comprising:
receiving via the communications network (104), by the remote computing system (102), used operational settings from a plurality of farming machines (106, 108, and 110) as well as real-time operating information of the plurality of farming machines (106, 108, and 110) that is an outcome of the used operational settings (step 602);
recording in the relational database (103), by the remote computing system (102), the used operational settings and the real-time operating information to add to the first relational database elements (step 604); and
further determining, by the remote computing system (102), the situational operational settings based on the used operational settings and the real-time operating information to enhance information provided by the second relational database elements (step 606).

9. The method of claim 8,
wherein the farming machine (106, 108, or 110), receiving the at least one setting sent from the remote computing system (102), is one of the plurality of farming machines (106, 108, and 110),
wherein the at least one setting sent from the remote computing system (102) causes at least one update in real-time operating information provided by the farming machine (106, 108, or 110) and eventually recorded in the relational database (103), and
wherein the updated real-time operating information is used, by the remote computing system (102), to determine an updated version of the at least one setting.

10. The method of claim 8, wherein the used operational settings include settings adjusted for different crop varieties, different geographic regions, different weather conditions, different soil conditions, or any combination thereof.

11. The method of claim 8, wherein the used operational settings include settings adjusted for different crop varieties, different geographic regions, different weather conditions, and different soil conditions.

12. The method of claim 8, wherein the used operational settings are settings adjusted for different crop varieties, settings adjusted for different geographic regions, settings adjusted for different weather conditions, settings adjusted for different soil conditions, or settings adjusted for a preference of the operator of the farming machine (106, 108, or 110).

13. The method of claim 8, comprising:
displaying, by a graphical user interface (GUI) (800) rendered by the computer (116, 118, or 120) of the farming machine (106, 108, or 110), a first graphical indicator of an operational setting preferred and identified by the operator (804) on a graphical output (802) of a meter (126, 128, or 130) of the farming machine (106, 108, or 110) corresponding to the operational setting (step 702); and
displaying, by the GUI (800), a second graphical indicator of a situational setting (806) of the situational operational settings on the graphical output (802) of the meter (126, 128, or 130) of the farming machine (106, 108, or 110) corresponding to the operational setting (step 704).

14. A system, comprising:
a communications network (104); and
a remote computing system (102), configured to:
receive, via the communications network (104), agricultural information including prescribed operational settings for farming machines (106, 108, and 110), crop variety information, and environmental information that includes weather condition factors and soil condition factors;
record the agricultural information as first relational database elements in a relational database (103);
determine situational operational settings based on the recorded agricultural information;
record the situational operational settings as second relational database elements in the relational database (103);
link the second relational database elements to the first relational database elements according to inputs of the determinations of the situational operational settings;
select at least one setting of the recorded situational operational settings according to a database query based on or included in a request sent from a computer (116, 118, or 120) of a farming machine (106, 108, or 110); and
send, via the communications network (104), the at least one setting to the farming machine (106, 108, or 110) according to the request.

15. A method, comprising:
receiving, by a remote computing system (102), agricultural information including prescribed operational settings for farming machines (106, 108, and 110), crop variety information, and environmental information that includes weather condition factors and soil condition factors (step 402);
recording, by the remote computing system (102), the agricultural information as first relational database elements in a relational database (103) (step 404);
determining, by the remote computing system (102), situational operational settings based on the recorded agricultural information (step 406);
recording, by the remote computing system (102), the situational operational settings as second relational database elements in the relational database (103) (step 408);
selecting, by the remote computing system (102), at least one setting of the recorded situational operational settings according to a database query based on or included in a request sent from a computer (116, 118, or 120) of a farming machine (106, 108, or 110) (step 412); and
sending, by the remote computing system (102), the at least one setting to the farming machine (106, 108, or 110) according to the request (step 414).
